# EUROPEAN PATENT SPECIFICATION

(11) **EP 4 586 377 B1**
(45) Date of publication and mention of the grant of the patent: **25.02.2026**
(21) Application number: 25150192.0
(22) Date of filing: 03.01.2025
(51) Int. Cl.: H01M 50/202, H01M 50/204, H01M 50/242, H01M 50/244, H01M 50/264, H01M 50/209, H01M 50/247

(54) **BATTERY AND ELECTRIC APPARATUS**
BATTERIE UND ELEKTRISCHE VORRICHTUNG
BATTERIE ET APPAREIL ÉLECTRIQUE

(30) Priority: 09.01.2024 CN 202420043232 U
(43) Date of publication of application: 16.07.2025
(73) Proprietor: Contemporary Amperex Technology Co., Limited, Ningde, Fujian 352100 (CN)
(72) Inventor: LIN, Zhiquan, Ningde, 352100 (CN); JIA, Jun, Ningde, 352100 (CN); ZHANG, Haidong, Ningde, 352100 (CN); YE, Shuifang, Ningde, 352100 (CN)
(74) Representative: Ran, Handong

(56) References cited:
- EP-B1- 3 547 391
- WO-A1-2019/184495
- WO-A1-2023/159508

## Description

### TECHNICAL FIELD

This application relates to the battery field, and particularly to a battery and an electric apparatus.

### BACKGROUND

Energy saving and emission reduction are crucial to the sustainable development of the automobile industry. New energy vehicles, with their advantages in energy conservation and environmental protection, have become an important part of sustainable development of the automobile industry. Battery technologies are an important factor in the development of electric vehicles.

During the use of the battery when being charged or discharged, the battery cell swells. For a module-free battery pack, the swelling force of the battery cell is borne by box beams, resulting in a large deformation amount of the box beams and a risk of structural failure of the battery.

WO2019/184495A1 discloses a fixing pressing plate and a battery box. The fixing pressing plate comprises: a pressing plate body, which is elongate and has a top surface and a bottom surface opposite to each other in a thickness direction. The bottom surface is provided facing a battery cell; the top surface comprises two circuit plate mounting surfaces which are spaced apart in a width direction of the pressing plate body, and the circuit plate mounting surfaces extend a length direction of the pressing plate body; the pressing plate body comprises a connection fixing part which is formed by sinking from the top surface to the bottom surface; the connection fixing part extends in the length direction and comprises an opening and a guide slot communicated with the opening; the opening is located between the two circuit plate mounting surfaces; and the maximum width of the opening is smaller than the maximum width of the guide slot. The fixing pressing plate according to the embodiments of the present application is able to firmly fix a battery cell to a battery box and guarantee the position stability of the battery cell.

EP3547391B1 discloses a protective pressure plate (1) and a battery module. The protective pressure plate (1) comprises a pressure plate body (11) having a strip-like shape. The pressure plate body (11) includes an upper surface (11a) and a lower surface (11b) that are opposed in a thickness direction (Z) of the pressure plate body (11) and two side surfaces (11c) that are opposed in a width direction (Y) of the pressure plate body (11). At least one portion of each of the side surfaces (11c) is recessed toward a center line (110) of the pressure plate body (11) to form a protective recess (lid). The upper surface (11a) of the pressure plate body (11) has a maximum width greater than a maximum width of the lower surface (11b). The protective pressure plate (1) according to the embodiment of the present disclosure can be used to fix the circuit board (5) and protect the bonding wires (6), thereby improving the use safety and stability of the battery module.

WO2023/159508A1 discloses a battery, an electric device, and a method and apparatus for manufacturing a battery. The battery comprises a first restraint piece and a second restraint piece which are arranged away from each other; a battery cell group arranged between the first restraint piece and the second restraint piece in a staked manner; a fixing band comprising a first end portion and a second end portion, the first end portion being fixed to the first restraint piece; and an adjusting device installed on the second restraint piece and used to be connected to the second end portion and to adjust the pre-tightening force of the fixing band. In the present application, the adjusting device is connected to the fixing band to adjust the pre-tightening force of the fixing band, so that the problem of inconsistent pre-tightening force of the fixing band is effectively avoided; and by adjusting the pre-tightening force of the fixing band, the fixing band can better balance and bear an expansion force transmitted to the first restraint piece and the second restraint piece when a battery cell expands, so that the problem of battery deformation caused by the expansion of the battery cell is effectively inhibited, thereby helping to prolong the service life of a battery.

### SUMMARY

In view of this, this application provides a battery and an electric apparatus, which can reduce the deformation amount of the box beams and improve the reliability of the battery.

According to an embodiment of a first aspect of this application, a battery is provided as set out in claim 1.

The battery provided in this embodiment of this application includes a box, a battery cell, and a press-fitting member. Because two ends of the press-fitting member are respectively connected to the two box beams, the press-fitting member can reduce the risk that box beams deform because the battery cell swells and squeezes the box, thereby reducing the deformation amount of the box beams, further reducing a risk of structural failure of the battery. The press-fitting member includes a first pressing strip and a second pressing strip fixedly connected to the first pressing strip. The first pressing strip includes a metal pressing strip and a first insulation layer covering the metal pressing strip. The metal pressing strip has high structural strength, reducing a risk of breakage under external forces. The first insulation layer and the second pressing strip can provide a dual insulation effect, such that the press-fitting member can be insulated from the battery cell and/or other adjacent elements, reducing the risk of the press-fitting member conducting with the battery cell and/or other adjacent elements. Therefore, the battery, with the arrangement of the press-fitting member, can alleviate the impact of the swelling force of the battery cell, reduce the deformation amount of the box beams, and improve the structural stability and reliability of the battery.

In some embodiments, the second pressing strip is disposed between the first pressing strip and the battery cell.

With the use of the above technical solution, disposing the second pressing strip between the first pressing strip and the battery cell ensures that even if the first insulation layer of the first pressing strip partially falls off or is damaged, the press-fitting member can still be insulated from the battery cell, improving the insulation reliability of the press-fitting member.

In some embodiments, the second pressing strip is adhered to the battery cell.

The use of the above technical solution can enhance the overall rigidity of the battery, improve the modal of the battery, and reduce the probability of the press-fitting member slapping the battery cell up and down. Additionally, the second pressing strip can isolate the metal pressing strip from the battery cell, preventing high-voltage arcing.

In some embodiments, a glue accommodating groove is provided on a side of the second pressing strip back away from the first pressing strip, and the glue accommodating groove is used for accommodating glue.

With the use of the above technical solution, the accommodation groove can accommodate the glue and limit the thickness of the glue, ensuring certain strength of the glue and reducing the risk of glue overflow.

In some embodiments, the second pressing strip includes two opposite first side portions and a first bottom portion connected between the two first side portions, the first side portions and the first bottom portion both extend along the first direction, the two first side portions and the first bottom portion enclose an accommodation groove with an open end, and the first pressing strip is accommodated in the accommodation groove.

With the use of the above technical solution, the second pressing strip can cover both the bottom edge and the two side edges of the first pressing strip, such that the first bottom portion is used to isolate the metal pressing strip from the battery cell and the first side portion is used to isolate the metal pressing strip from adjacent components.

In some embodiments, the first pressing strip is fixed in the accommodation groove using glue.

With the use of the above technical solution, the first pressing strip is fixedly adhered in the accommodation groove of the second pressing strip using glue. The adhesive connection method is simple to operate, has strong connection reliability, and improves the reliability of the battery.

In some embodiments, along the second direction, the first side portion protrudes relative to the first pressing strip.

As the first side portion is arranged to protrude relative to the first pressing strip, the first side portion can effectively isolate the first pressing strip from components on its side, providing a good insulation effect.

In some embodiments, the battery further includes a busbar electrically connected to the battery cell; and along the second direction, the first side portion is flush with the busbar or the first side portion exceeds the busbar.

With the use of the above technical solution, the second pressing strip can effectively isolate the first pressing strip from the busbar, reducing the probability of electrical conduction between the metal pressing strip and the busbar.

In some embodiments, the first side portion has a flanging structure folded towards an outer side of the accommodation groove, and the flanging structure is located on a side of the busbar back away from the battery cell.

Arranging the flanging structure on the second pressing strip increases the electrical clearance and creepage distance between the second pressing strip and the busbar. Additionally, the flanging structure is spaced apart from the busbar, avoiding interference with the busbar and reducing the possibility of wear on the busbar during long-term vibrations, thereby ensuring the operating performance of the busbar.

In some embodiments, the first insulation layer covers a circumferential side of the metal pressing strip along the first direction, and the first insulation layer includes at least one of a thermoplastic insulation layer, an insulation coating, and an insulation patch layer.

With the use of the above technical solution, the first pressing strip includes a metal pressing strip and a first insulation layer. The first insulation layer can be manufactured using various methods, allowing for a flexible and convenient manufacturing process.

In some embodiments, the press-fitting member further includes at least one adapter, the adapter is connected to an end of the metal pressing strip, and the press-fitting member is connected to the box beam via the adapter.

With the use of the above technical solution, because the end of the metal pressing strip is provided with the adapter, the metal pressing strip and/or the adapter can adopt a standardized design. For different sizes of boxes, it is only necessary to change the length of the metal pressing strip to achieve multiple uses with one mold, reducing mold costs.

In some embodiments, the adapter includes a first fixing portion and a second fixing portion connected along the first direction, the first fixing portion is connected to the metal pressing strip, the second fixing portion is connected to the box beam, and a surface of the first fixing portion facing the metal pressing strip is not flush with a surface of the second fixing portion facing the box beam.

With the use of the above technical solution, there is a section difference between the first fixing portion and the second fixing portion of the adapter. During assembly, the adapter has a certain flexible deformation ability and can absorb assembly tolerance, reducing the probability of mounting failure due to tolerance, and lowering the assembly difficulty between the press-fitting member and the box beam.

In some embodiments, the adapter is a metal member, and the first insulation layer and the second pressing strip both expose the second fixing portion; and
at least one first fixing hole is provided in the second fixing portion, at least one second fixing hole is provided in the box beam, the battery further includes a fastener, and the fastener passes through the corresponding first fixing hole and second fixing hole.

With the use of the above technical solution, the adapter is arranged as a metal member and fixed to the box beam via a fastener, reducing the risk of the fastener backing out.

In some embodiments, the press-fitting member further includes a pad, and the pad is fixed between the box beam and the adapter.

With the use of the above technical solution, placing the pad between the press-fitting member and the box beam facilitates the connection of the press-fitting member to both the box beam and the battery cell. In addition, the pad can increase the contact area between the press-fitting member and the fastener, improving the connection strength.

According to an embodiment of a second aspect of this application, an electric apparatus is provided, including the battery described according to the first aspect.

The foregoing description is merely an overview of the technical solutions of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

To describe the technical solutions in the embodiments of this application more clearly, the following briefly describes the accompanying drawings required for describing the embodiments or conventional technologies. Apparently, the accompanying drawings in the following description show merely some embodiments of this application, and persons of ordinary skill in the art may still derive other drawings from these accompanying drawings without creative efforts.
FIG. 1 is a schematic structural diagram of a vehicle according to an embodiment of this application;
FIG. 2 is a schematic structural diagram of a battery according to an embodiment of this application;
FIG. 3 is a schematic three-dimensional exploded view of the battery in FIG. 2;
FIG. 4 is a partially enlarged view of part A in the battery in FIG. 3;
FIG. 5 is a schematic three-dimensional view of a press-fitting member in the battery in FIG. 2;
FIG. 6 is a three-dimensional exploded view of the press-fitting member in FIG. 5;
FIG. 7 is a partially enlarged view of part B in the press-fitting member in FIG. 6;
FIG. 8 is a schematic assembly view of a battery cell, a press-fitting member, and a busbar according to an embodiment of this application;
FIG. 9 is a side view of a press-fitting member according to an embodiment of this application;
FIG. 10 is a side view of a press-fitting member according to another embodiment of this application;
FIG. 11 is a side view of a press-fitting member according to still another embodiment of this application; and
FIG. 12 is a side view of a press-fitting member according to yet another embodiment of this application.

### Description of numeral references:

1000. vehicle; 100. battery; 200. controller; 300. motor;
10. box; 11. box beam; 111. second fixing hole;
20. battery cell;
30. press-fitting member;
31. first pressing strip; 311. metal pressing strip; 3111. first connection hole; 312. first insulation layer;
32. second pressing strip; 321. first side portion; 3211. flanging structure; 3212. extension portion; 322. first bottom portion; 3221. protruding structure; 324. accommodation groove; 325. glue accommodating groove;
33. adapter; 331. first fixing portion; 3311. second connection hole; 332. second fixing portion; 3321. first fixing hole;
34. pad;
41. first glue; 42. second glue;
50. busbar;
60. fastener;
Z. first direction; X. second direction; and Y. third direction.

### DESCRIPTION OF EMBODIMENTS

The following describes in detail embodiments of technical solutions of this application with reference to the accompanying drawings. The following embodiments are merely intended for a clearer description of the technical solutions of this application and therefore are merely used as examples which do not constitute any limitation on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include" and "have" and any other variations thereof in the specification, claims and brief description of drawings of this application are intended to cover non-exclusive inclusions.

In the descriptions of the embodiments of this application, the technical terms "first", "second", and the like are merely intended to distinguish between different objects, and shall not be understood as any indication or implication of relative importance or any implicit indication of the number, specific sequence, or primary-secondary relationship of the technical features indicated. In the descriptions of the embodiments of this application, "multiple" means more than two, unless otherwise specifically defined.

The term "embodiment" described herein means that specific features, structures or characteristics in combination with descriptions of the embodiments may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the description of some embodiments of this application, the term "and/or" is only an associative relationship for describing associated objects, indicating that three relationships may be present. For example, A and/or B may indicate the following three cases: presence of only A, presence of both A and B, and presence of only B. In addition, a character "/" in this specification generally indicates an "or" relationship between contextually associated objects.

In the descriptions of the embodiments of this application, the term "multiple" means more than two (inclusive). Similarly, "multiple groups" means more than two (inclusive) groups, and "multiple pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "vertical", "horizontal", "top", "bottom", "inside", "outside", and the like are based on the orientations or positional relationships as shown in the accompanying drawings. These terms are merely for ease and brevity of description of the embodiments of this application rather than indicating or implying that the means or elements mentioned must have specific orientations or must be constructed or manipulated according to specific orientations, and therefore shall not be construed as any limitation on the embodiments of this application.

In the description of the embodiments of this application, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, or a communication or interaction between two elements. Persons of ordinary skill in the art can understand specific meanings of these terms in the embodiments of this application as suitable to specific situations.

At present, battery technologies are an important factor in the development of electric vehicles. During the use of the battery when being charged or discharged, the battery cell swells. For a module-free battery pack, battery cells are directly integrated into a battery pack, eliminating an intermediate module structure and parts such as a module end plate, a side plate, and a steel band. The swelling force of the battery cell is borne by a box beam, resulting in a large deformation amount of the box beam and a risk that a welding seam on a box cracks, which in turn leads to a risk of structural failure of the battery.

In view of this, an embodiment of this application provides a battery, where a press-fitting member connects two box beams, thereby reducing a risk that the box beams deform because the battery cell swells and squeezes the box beams. The battery provided by the embodiment of this application includes a box, a battery cell, and a press-fitting member. The box includes at least two opposite box beams along a first direction, and the battery cell is disposed between the two box beams. Two ends of the press-fitting member are respectively connected to the two box beams. The press-fitting member includes a first pressing strip and a second pressing strip extending along the first pressing strip. The first pressing strip includes a metal pressing strip and a first insulation layer covering the metal pressing strip, and the second pressing strip is an insulating member fixedly connected to the metal pressing strip.

In the above battery, because the two ends of the press-fitting member are respectively connected to the two box beams, the press-fitting member can reduce the risk that the box beams deform because the battery cell swells and squeezes the box beams, reducing the deformation amount of the box beams, thus lowering a risk of structural failure of the battery. Because the press-fitting member includes the first pressing strip and the second pressing strip, the first insulation layer in the first pressing strip and the insulating second pressing strip can provide a dual insulation effect, allowing the press-fitting member to be insulated from the battery cell. The metal pressing strip has high structural strength, and the press-fitting member can be connected to the box beams via fasteners, reducing the risk of the fastener backing out. Therefore, the above battery, with the arrangement of the press-fitting member connecting the two box beams, can alleviate the impact of the swelling force of the battery cell, reduce the deformation amount of the box beams, and improve the structural stability and reliability of the battery.

According to an embodiment of a first aspect of this application, a battery is provided. The battery disclosed in this embodiment of this application can be used for electric apparatuses that use a battery as a power source or various energy storage systems that use a battery as an energy storage element. The electric apparatus may be but is not limited to a mobile phone, a tablet computer, a laptop computer, an electric toy, an electric tool, an electric bicycle, an electric vehicle, a ship, and a spacecraft. The electric toy may be a fixed or mobile electric toy, for example, a game console, an electric toy car, an electric toy ship, or an electric toy airplane. The spacecraft may include an airplane, a rocket, a space shuttle, a spaceship, and the like.

For ease of description, an electric apparatus according to an embodiment of this application being a vehicle 1000 is used as an example for description of the following embodiments.

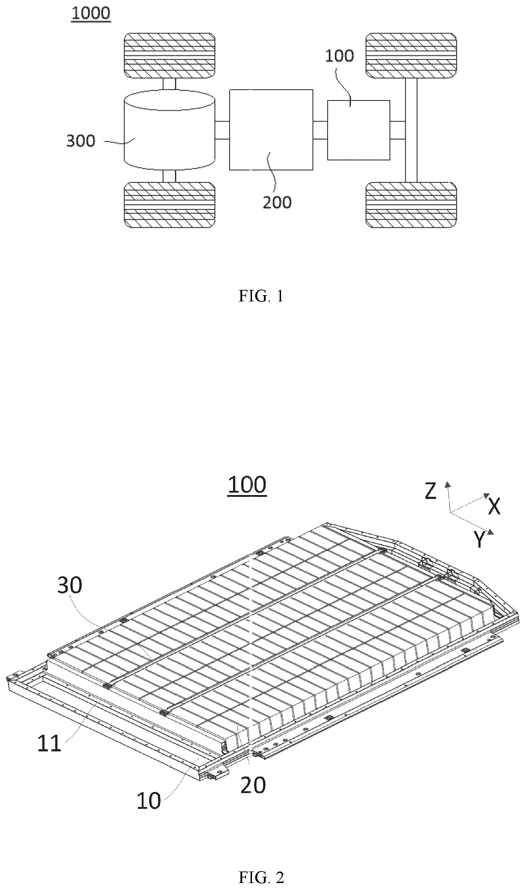

Refer to FIG. 1. FIG. 1 is a schematic structural diagram of the vehicle 1000 according to some embodiments of this application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery 100 inside, and the battery 100 may be disposed at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIGs. 2 to 7, according to an embodiment of the first aspect of this application, a battery 100 is provided. The battery 100 includes a box 10, a battery cell 20, and a press-fitting member 30. The box 10 includes at least two box beams 11 spaced apart along first direction X. The battery cell 20 is accommodated in the box 10 and disposed between the two box beams 11. Two ends of the press-fitting member 30 are respectively connected to the two box beams 11, the press-fitting member 30 is arranged on a side of the battery cell 20 along second direction Z, and the second direction Z intersects the first direction X. The press-fitting member 30 includes a first pressing strip 31 and a second pressing strip 32 extending along the first pressing strip 31. The first pressing strip 31 includes a metal pressing strip 311 and a first insulation layer 312 covering a surface of the metal pressing strip 311. The second pressing strip 32 is an insulating member fixedly connected to the metal pressing strip 311.

The box 10 is used to provide an accommodating space for the battery cell 20. The box 10 may be in various shapes of, for example, a cylinder or cuboid. The box 10 may be made of an alloy material such as an aluminum alloy and an iron alloy, a polymer material such as polycarbonate and polyisocyanurate foam, or a composite material of glass fiber and epoxy resin.

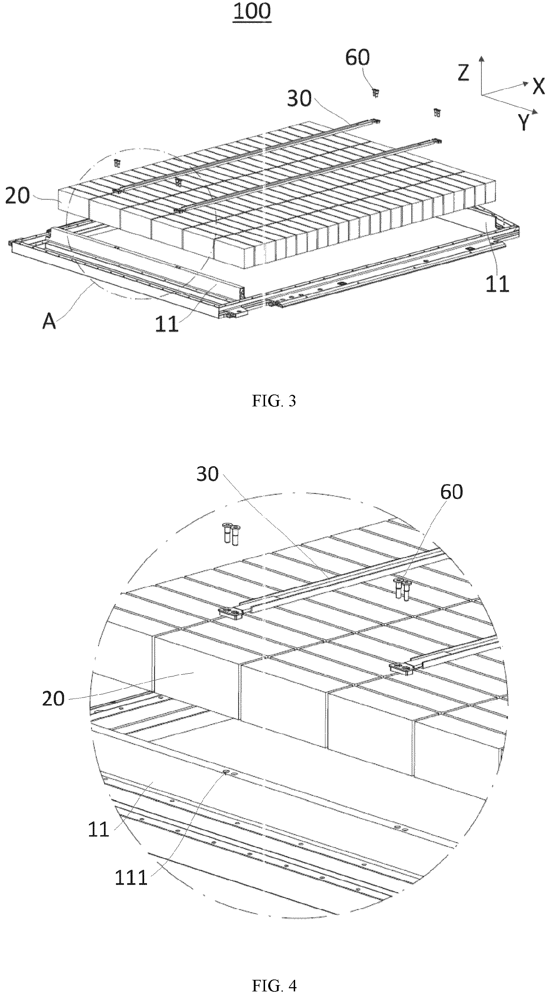

As shown in FIGs. 2 and 3, the box 10 includes two box beams 11 spaced apart along the first direction X, the first direction X being a direction in which the swelling force of the battery cell 20 is greatest during charge and discharge of the battery 100. The battery cell 20 swells along the first direction X and squeezes the box beams 11 on two sides in the first direction X. It can be understood that there may be more than two box beams 11, and every two box beams 11 form a set and are opposite along the first direction X.

The box beams 11 are wall panels on the box 10 and may be integrally formed with or fixedly connected to the rest structure of the box 10. The box beams 11 may be made of metal or plastic, and the box beams 11 may be flat, columnar, or of other shapes. Optionally, the box 10 includes a lower box body, and the lower box body includes a bottom plate, with the box beams 11 vertically arranged on the bottom plate.

Optionally and not according to the invention, the box beams 11 are expansion beams of the box 10.

The battery 100 may include multiple battery cells 20, and the multiple battery cells 20 are arranged between the two box beams 11 along the first direction X. Furthermore, the multiple battery cells 20 may also be arranged in multiple rows along third direction Y, with each row of battery cells 20 arranged between the two box beams 11.

The multiple battery cells 20 may be connected in series, parallel, or series-parallel, where being connected in series-parallel means a combination of series and parallel connections of the multiple battery cells 20. The multiple battery cells 20 may be directly connected in series, parallel, or series-parallel, and then an entirety of the multiple battery cells 20 is accommodated in the box 10. Certainly, the battery 100 may alternatively be formed in a manner that multiple battery cells 20 are connected in series, parallel, or series-parallel first to form a battery module and then multiple battery modules are connected in series, parallel, or series-parallel to form an entirety which is accommodated in the box 10. The battery 100 may further include other structures. For example, the battery 100 may further include a busbar component configured to implement electrical connection between the plurality of battery cells 20.

Each battery cell 20 may be a secondary battery cell or a primary battery cell or may further be a lithium-sulfur battery, a sodium-ion battery, or a magnesium-ion battery, but is not limited thereto. The battery cell 20 may be cylindrical, flat, cuboid, or of other shapes. In this embodiment, for example, the battery cell 20 is cuboid for description.

The battery cell 20 refers to the smallest unit that constitutes the battery. The battery cell 20 includes a housing, an electrode assembly, and an electrolyte, and the electrode assembly and the electrolyte are both accommodated in the housing. The housing may include a shell with an opening and an end cover. The end cover covers the opening of the shell to isolate the internal environment of the battery cell from the external environment. Functional components such as an electrode terminal may be provided on the end cover. The electrode terminal may be further provided with a pressure relief mechanism for releasing internal pressure when the internal pressure or temperature of the battery cell reaches a threshold. The housing may be of various shapes and sizes, such as rectangular, cylindrical, or hexagonal. The housing may be made of various metals, such as but not limited to copper, iron, aluminum, stainless steel, and aluminum alloy. The electrode assembly is a component in which electrochemical reactions take place in the battery cell 20. The housing may include one or more electrode assemblies.

The press-fitting member 30 is an element mounted on the box 10 and alleviating the impact of the swelling force of the battery cell 20. The press-fitting member 30 may be of a long strip structure, and the extension direction of the press-fitting member 30 is the same as the first direction X. The press-fitting member 30 is arranged on a side of the battery cell 20 along the second direction Z and can constrain the battery cell 20 in the second direction Z, where the second direction Z may be the height direction of the battery cell 20 and the battery 100. The two ends of the press-fitting member 30 are respectively connected to the two box beams 11, where the press-fitting member 30 may be connected to the box beams 11 through at least one of snap-fitting, welding, riveting, adhering, or bolting.

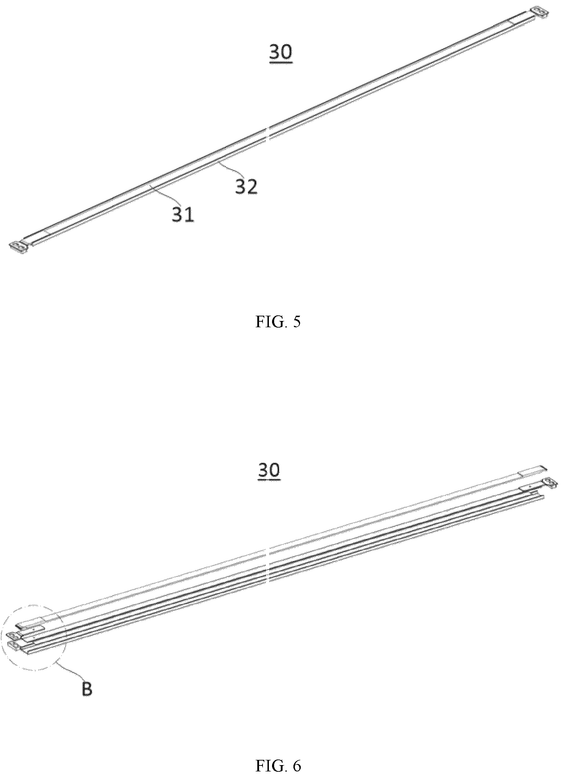

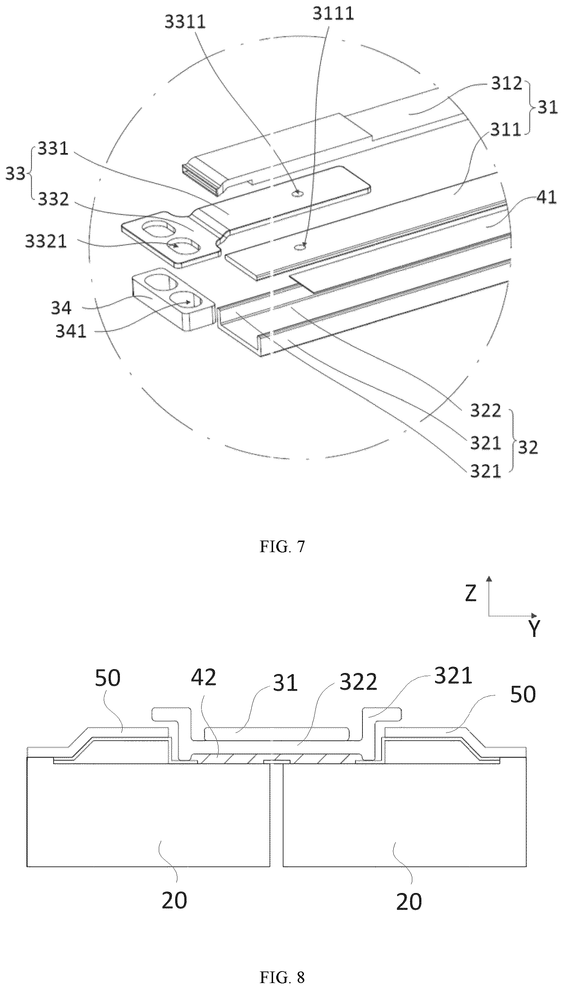

As shown in FIGs. 6 and 7, the press-fitting member 30 includes the first pressing strip 31 and the second pressing strip 32, and the first pressing strip 31 and the second pressing strip 32 both extend in the first direction X. The second pressing strip 32 may be arranged on a side of the first pressing strip 31 closer to the battery cell 20 or on a side of the first pressing strip 31 farther from the battery cell 20.

The first pressing strip 31 includes the metal pressing strip 311 and the first insulation layer 312 covering the metal pressing strip 311. The metal pressing strip 311 may be a steel strip or another metal member. The first insulation layer 312 may cover a circumferential surface of the metal pressing strip 311 or may at least cover a side of the metal pressing strip 311. For example, the first insulation layer 312 covers a side of the metal pressing strip 311 close to the battery cell 20. The first insulation layer 312 is an insulation layer fixed to the metal pressing strip 311, where the first insulation layer 312 may be a thermoplastic insulation layer, an insulation coating, or another insulation structure.

The second pressing strip 32 is an insulating member fixedly connected to the metal pressing strip 311. The metal pressing strip 311 is insulated from the battery cell 20 via the first insulation layer 312 and the second pressing strip 32. The second pressing strip 32 may be made of a composite insulating material, and for example, the second pressing strip 32 is made of a composite material of fiberglass and epoxy resin. The second pressing strip 32 has an insulating effect and can provide a dual insulation effect in the press-fitting member 30. During the transportation or mounting of the press-fitting member 30, the first insulation layer 312 may partially fall off, and the second pressing strip 32 can maintain the insulation of the press-fitting member 30.

The battery 100 provided in this embodiment of this application includes a box 10, a battery cell 20, and a press-fitting member 30. The box 10 includes at least two box beams 11 spaced apart along a first direction. Because two ends of the press-fitting member 30 are respectively connected to the two box beams 11, the press-fitting member 30 can reduce the risk that the box beams 11 deform because the battery cell 20 swells and squeezes the box 10, thereby reducing the deformation amount of the box beams 11, further reducing a risk of structural failure of the battery 100. The press-fitting member 30 includes a first pressing strip 31 and a second pressing strip 32 fixedly connected to the first pressing strip 31. The first pressing strip 31 includes a metal pressing strip 311 and a first insulation layer 312 covering the metal pressing strip 311. The metal pressing strip 311 has high structural strength, reducing a risk of breakage under external forces. The first insulation layer 312 and the second pressing strip 32 can provide a dual insulation effect, such that the press-fitting member 30 can be insulated from the battery cell 20 and/or other adjacent elements, reducing the risk of the press-fitting member 30 conducting with the battery cell 20 and/or other adjacent elements. Therefore, the battery 100, with the arrangement of the press-fitting member 30, can alleviate the impact of the swelling force of the battery cell 20, reduce the deformation amount of the box beams 11, and improve the structural stability and reliability of the battery 100.

Additionally, the battery 100 provided by this embodiment of this application may be a module-free battery, meaning that the battery cells 20 are directly integrated into the box 10 without arranging parts such as a module end plate and a side plate in the box 10. It can be understood that the battery cells 20 may further be assembled into a module via parts such as a module end plate and integrated into the box 10, and the press-fitting member 30 can also reduce the deformation of the box beams 11.

Referring to FIGs. 6 to 8, in some embodiments, the second pressing strip 32 is disposed between the first pressing strip 31 and the battery cell 20.

Specifically, along the second direction Z, the second pressing strip 32 is disposed on a side of the first pressing strip 31 close to the battery cell 20. Because the second pressing strip 32 is an insulating member, disposing the second pressing strip 32 between the first pressing strip 31 and the battery cell 20 ensures that even if the first insulation layer 312 of the first pressing strip 31 partially falls off or is damaged, the press-fitting member 30 can still be insulated from the battery cell 20, improving the insulation reliability of the press-fitting member 30.

In other embodiments, the second pressing strip 32 may further be disposed on a side of the first pressing strip 31 back away from the battery cell 20. For example, the second pressing strip 32 may be of a box-shaped structure with an open end, which covers a side of the first pressing strip 31 back away from the battery cell 20 and two opposite sides of the first pressing strip 31 along the third direction.

Referring to FIGs. 6 to 8, in some embodiments, the second pressing strip 32 is disposed between the first pressing strip 31 and the battery cell 20, and the second pressing strip 32 is adhered to the battery cell 20.

Specifically, the second pressing strip 32 is adhered to the battery cell 20 using glue such as a structural adhesive. FIG. 8 shows second glue 42 being provided between the second pressing strip 32 and the battery cell 20. It can be understood that because the second pressing strip 32 extends along the first direction X, the second glue 42 may also be applied above one row or two adjacent rows of battery cells 20 along the first direction X. The battery 100 may further include an isolation plate disposed above the battery cell 20, the isolation plate is provided with a through hole exposing part of the battery cell 20, and the second glue 42 can be partially accommodated in the through hole.

When the battery 100 is assembled, the second pressing strip 32 is first fixedly connected to the first pressing strip 31 to form the press-fitting member 30. The second glue 42 is then applied to the battery cell 20, and the press-fitting member 30 is adhered to the battery cell 20 using the second glue 42. Finally, the two ends of the press-fitting member 30 are respectively fixedly connected to the two box beams 11.

Adhering the second pressing strip 32 to the battery cell 20 can enhance the overall rigidity of the battery 100, improve the modal of the battery 100, and reduce the probability of the press-fitting member 30 slapping the battery cell 20 up and down. Additionally, the second pressing strip 32 can isolate the metal pressing strip 311 from the battery cell 20, preventing high-voltage arcing.

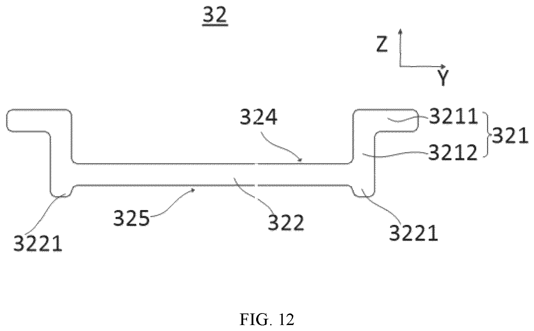

Referring to FIGs. 8, 11, and 12, in some embodiments, a glue accommodating groove 325 is provided on a side of the second pressing strip 32 back away from the first pressing strip 31, and the glue accommodating groove 325 is used for accommodating glue.

The glue accommodating groove 325 can extend along the length direction of the second pressing strip 32. Because the second pressing strip 32 is adhered to the battery cell 20 using glue, the glue accommodating groove 325 is provided in the second pressing strip 32, and the accommodation groove 324 can accommodate the glue and limit the thickness of the glue, ensuring certain strength of the glue and reducing the risk of glue overflow.

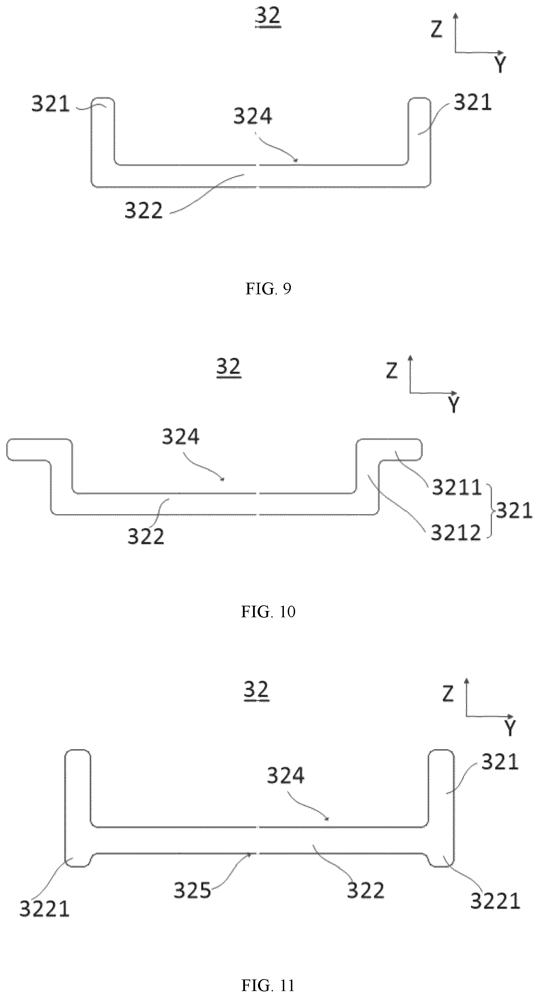

Referring to FIGs. 7 and 9, in some embodiments, the second pressing strip 32 includes two opposite first side portions 321 and a first bottom portion 322 connected between the two first side portions 321. The first side portions 321 and the first bottom portion 322 both extend along the first direction. The two first side portions 321 and the first bottom portion 322 enclose an accommodation groove 324 with an open end, and the first pressing strip 31 is accommodated in the accommodation groove 324.

The second pressing strip 32 is roughly in the shape of a stripped box, with the opening of the second pressing strip 32 facing the first pressing strip 31. The two first side portions 321 are both disposed on a side of the first bottom portion 322 along the second direction Z. The two first side portions 321 may be arranged in parallel or at an included angle. The first pressing strip 31 is accommodated and fixed in the accommodation groove 324 of the second pressing strip 32, meaning that the two first side portions 321 respectively cover side edges of the first pressing strip 31, and the first bottom portion 322 covers a bottom edge of the first pressing strip 31.

With the use of the above technical solution, the second pressing strip 32 can cover both the bottom edge and the two side edges of the first pressing strip 31, such that the first bottom portion 322 is used to isolate the metal pressing strip 311 from the battery cell 20 and the first side portion 321 is used to isolate the metal pressing strip 311 from adjacent components.

In other embodiments, the second pressing strip 32 may also be of another structure, for example, without the first side portions 321 of the second pressing strip 32.

Referring to FIG. 7, in some embodiments, the first pressing strip 31 is fixed in the accommodation groove 324 using glue.

Specifically, the first pressing strip 31 is fixedly adhered to the first bottom portion 322 using first glue 41. Because the first pressing strip 31 includes the metal pressing strip 311 and the first insulation layer 312 covering the metal pressing strip 311, the first glue may be disposed between the first insulation layer 312 and the first bottom portion 322. The first glue 41 may be a structural adhesive, a double-sided tape, or the like.

In the embodiments of this application, the first pressing strip 31 is fixedly adhered in the accommodation groove 324 of the second pressing strip 32 using glue. The adhesive connection method is simple to operate, has strong connection reliability, and improves the reliability of the battery.

Referring to FIGs. 8, 11, and 12, in some embodiments, a glue accommodating groove 325 is provided on a side of the first bottom portion 322 back away from the first pressing strip 31, and the glue accommodating groove 325 is used for accommodating the glue.

For example, the two sides of the first bottom portion 322 are provided with protruding structures 3221 protruding along the second direction, and the two protruding structures 3221 are opposite to enclose the glue accommodating groove 325 on the first bottom portion 322. In another example, the first side portions 321 protrude from the first bottom portion 322, and the two first side portions 321 and the first bottom portion 322 enclose the glue accommodating groove 325 on a side close to the battery cell 20.

In this embodiment, the glue accommodating groove 325 is used for accommodating the second glue 42. The second glue 42 may be a structural adhesive or other glue, and the press-fitting member 30 is adhered to the battery cell 20 using the second glue 42.

Referring to FIG. 8, in some embodiments, along the second direction Z, the first side portion 321 protrudes relative to the first pressing strip 31.

Specifically, the first pressing strip 31 is accommodated in the accommodation groove 324 of the second pressing strip 32, and the first side portion 321 protrudes relative to the first pressing strip 31 along the second direction, meaning that the first side portion 321 is higher than the first pressing strip 31.

As the first side portion 321 is arranged to protrude relative to the first pressing strip 31, the first side portion 321 can effectively isolate the first pressing strip 31 from components on its side, providing a good insulation effect.

As shown in FIGs. 4 and 8, in some embodiments, the battery 100 further includes a busbar 50 electrically connected to the battery cell 20. Along the second direction Z, the first side portion 321 is flush with the busbar 50 or the first side portion 321 exceeds the busbar 50.

The busbar 50 is mainly used to achieve electrical connection between multiple battery cells 20. Taking FIGs. 4 and 8 as examples, each row of battery cells 20 is provided with a busbar 50, and the press-fitting member 30 is fixedly connected to two adjacent rows of battery cells 20, such that the press-fitting member 30 is located between two busbars 50 along the third direction. The first bottom portion 322 of the second pressing strip 32 is fixedly adhered to the battery cell 20, and each first side portion 321 is located between the first pressing strip 31 and the busbar 50, allowing the first side portion 321 to electrically isolate the first pressing strip 31 from the busbar 50. Along the second direction Z, the height of the first side portion 321 is greater than or equal to the height of the busbar 50, further reducing the probability of electrical conduction between the metal pressing strip 311 and the busbar 50. When the first side portion 321 exceeds the busbar 50, the first side portion 321 is located above the busbar 50, increasing the electrical clearance and creepage distance between the press-fitting member 30 and the busbar 50.

With the use of the above technical solution, the second pressing strip 32 can effectively isolate the first pressing strip 31 from the busbar 50, reducing the probability of electrical conduction between the metal pressing strip 311 and the busbar 50.

Referring to FIGs. 8, 10, and 12, in some embodiments, the first side portion 321 has a flanging structure 3211 folded towards the outer side of the accommodation groove 324, the flanging structure 3211 is located on a side of the busbar 50 back away from the battery cell 20, and the flanging structure 3211 is spaced apart from the busbar 50.

Specifically, the first side portion 321 includes a flanging structure 3211 and an extension portion 3212. The extension portion 3212 extends along the second direction Z to allow for a certain height of the first side portion 321. The flanging structure 3211 is bent and connected to the extension portion 3212, extends towards a side of the busbar 50, and is located above the busbar 50. The flanging structure 3211 is spaced apart from the busbar 50, avoiding interference with the busbar 50.

Arranging the flanging structure 3211 on the second pressing strip 32 increases the electrical clearance and creepage distance between the second pressing strip 32 and the busbar 50. Additionally, the flanging structure 3211 is spaced apart from the busbar 50, avoiding interference with the busbar 50 and reducing the possibility of wear on the busbar 50 during long-term vibrations, thereby ensuring the operating performance of the busbar 50.

In some embodiments, the first insulation layer 312 covers the circumferential side of the metal pressing strip 311 along the first direction X. The first insulation layer 312 includes at least one of a thermoplastic insulation layer, an insulation coating, and an insulation patch layer.

As shown in FIG. 7, in some embodiments, the first insulation layer 312 is a thermoplastic insulation layer, meaning that the first insulation layer 312 covers the metal pressing strip 311 through a thermoplastic process, forming an insulating sleeve. The first insulation layer 312 covers the circumferential side of the metal pressing strip 311 along the first direction X, providing a good insulation effect.

In other embodiments, the first insulation layer 312 may also be the insulation coating, which is attached to the circumferential side of the metal pressing strip 311 through spraying. The first insulation layer 312 may further be the insulation patch, and the material of the first insulation layer 312 may be PC, PP, PET, or the like, meaning that the first insulation layer 312 is independently formed into a sheet-like insulating member and then adhered to the metal pressing strip 311 using glue.

The first pressing strip 31 provided by the embodiments of this application includes a metal pressing strip 311 and a first insulation layer 312. The first insulation layer 312 can be manufactured using various methods, allowing for a flexible and convenient manufacturing process.

In some embodiments, the press-fitting member 30 further includes at least one adapter 33, the adapter 33 is connected to an end of the metal pressing strip 311, and the press-fitting member 30 is connected to the box beam 11 via the adapter 33.

The adapter 33 is an intermediate part used to connect the pressing strip and the box beam 11.

Optionally, the adapter 33 is provided at both ends of the metal pressing strip 311 along the first direction X. It can be understood that an adapter 33 may be provided only at one end of the metal pressing strip 311. The adapter 33 may be made of metal, such that the adapter 33 has high structural strength, and after connected to the box, can maintain an equal potential with the box. It can be understood that to maintain the equal potential between the adapter 33 and the box, the joint between the adapter 33 and the box beam 11 does not need to be provided with the first insulation layer 312 and/or the second pressing strip 32.

The adapter 33 may be detachably connected to the adapter 33 via a fastener. For example, as shown in FIG. 7, an end of the metal pressing strip 311 is provided with a first connection hole 3111, and the adapter 33 is provided with a second connection hole 3311. The adapter 33 and the metal pressing strip 311 partially overlap, so that the first connection hole corresponds to and communicates with the second connection hole. Thus, a fastener such as a screw passes through the first connection hole and the second connection hole to fixedly connect the adapter 33 to the metal pressing strip 311. It can be understood that the adapter 33 may also be connected to the metal pressing strip 311 by other means such as snap-fitting or welding.

Because the end of the metal pressing strip 311 is provided with the adapter 33, the metal pressing strip 311 and/or the adapter 33 can adopt a standardized design. For different sizes of boxes, it is only necessary to change the length of the metal pressing strip 311 to achieve multiple uses with one mold, reducing mold costs.

In some embodiments, the adapter 33 includes a first fixing portion 331 and a second fixing portion 332 connected along the first direction X. The first fixing portion 331 is connected to the metal pressing strip 311, and the second fixing portion 332 is connected to the box beam 11. A surface of the first fixing portion 331 facing the metal pressing strip 311 is not flush with a surface of the second fixing portion 332 facing the box beam 11.

The first fixing portion 331 is stacked with the metal pressing strip 311, and the first fixing portion 331 may be stacked on a side of the metal pressing strip 311 back away from the battery cell 20. An end of the metal pressing strip 311 is provided with a first connection hole 3111, and an end of the first fixing portion 331 is also provided with a second connection hole 3311. The first fixing portion 331 may be connected to the metal pressing strip 311 via a fastener passing through the first connection hole 3111 and the second connection hole 3311.

The second fixing portion 332 may be fixedly connected to the box beam 11 via a fastener. It can be understood that the second fixing portion 332 may also be connected to the box beam 11 by other means such as snap-fitting, welding, riveting, or adhering.

The surface of the first fixing portion 331 facing the pressing strip is not flush with the surface of the second fixing portion 332 facing the box beam 11. It can be understood that the first fixing portion 331 and the second fixing portion 332 may have equal thicknesses, and the surface of the first fixing portion 331 back away from the metal pressing strip 311 is neither flush with the surface of the second fixing portion 332 back away from the box beam 11. Thus, the height of the first fixing portion 331 is not equal to the height of the second fixing portion 332 on the box, meaning that there is a section difference between the first fixing portion 331 and the second fixing portion 332. For example, as shown in FIG. 7, the surface of the first fixing portion 331 facing the metal pressing strip 311 is higher than the surface of the second fixing portion 332 facing the box beam 11.

Optionally, the adapter 33 is a metal member, and the second fixing portion 332 is fixedly connected to the box beam 11 via a fastener 60. The first insulation layer 312 and the second pressing strip 32 expose the second fixing portion 332.

With the use of the above technical solution, there is a section difference between the first fixing portion 331 and the second fixing portion 332 of the adapter 33. During assembly, the adapter 33 has a certain flexible deformation ability and can absorb assembly tolerance, reducing the probability of mounting failure due to tolerance, and lowering the assembly difficulty between the press-fitting member 30 and the box beam 11.

In some embodiments, the adapter 33 is a metal member, and both the first insulation layer 312 and the second pressing strip 32 expose the second fixing portion 332. At least one first fixing hole 3321 is provided in the second fixing portion 332, and at least one second fixing hole 111 is provided in the box beam 11. The battery 100 further includes a fastener 60, and the fastener 60 passes through the corresponding first fixing hole 3321 and second fixing hole 111.

The adapter 33 is a metal member. For example, the adapter 33 may be a steel bar, aluminum bar, or the like, and thus the adapter 33 has high structural strength. The first insulation layer 312 and the second pressing strip 32 both expose the second fixing portion 332, meaning the second fixing portion 332 is not covered by the first insulation layer 312 and the second pressing strip 32.

At least one first fixing hole 3321 is provided in the second fixing portion 332, at least one second fixing hole 111 is provided in the box beam 11, and the fastener 60 passes through the corresponding first fixing hole 3321 and second fixing hole 111 to stably connect the adapter 33 and the box beam 11. The fastener 60 may be a bolt or another fastening element.

For example, as shown in FIG. 7, two first fixing holes 3321 are provided in the second fixing portion 332 and used for two fasteners 60 to pass through. Arranging multiple first fixing holes 3321 and multiple fasteners 60 can increase the connection area and improve the connection stability, such that the press-fitting member 30 is less likely to fall off during the subsequent use.

In some cases, the pressing strip is a non-metal member and fixed to the box beam 11 via a fastener. Due to the characteristics of the non-metal material, there is a risk that the fastener backs out after passing through the pressing strip and the box beam 11, where "backs out" means that the fastener retreats a certain depth after passing through the pressing strip. In the embodiments of this application, the adapter 33 is arranged as a metal member and fixed to the box beam 11 via a fastener, reducing the risk of the fastener backing out.

In some embodiments, the press-fitting member 30 further includes a pad 34, and the pad 34 is fixed between the box beam 11 and the adapter 33.

The pad 34 may be a sheet- or block-shaped structure, and is configured to be placed between the press-fitting member 30 and the box beam 11. Specifically, the pad 34 is placed between the second fixing portion 332 and the box beam 11. The fastener 60 can sequentially pass through the adapter 33 and the pad 34 to be fixed to the box beam 11. The height of the pad 34 can be set based on the height difference between the battery cell 20 and the box beam 11. It can be understood that for the passing through of the fastener 60, the pad 34 is correspondingly provided with a third fixing hole 341.

Because the battery cell 20 is usually higher than the box beam 11, placing the pad 34 between the press-fitting member 30 and the box beam 11 facilitates the connection of the press-fitting member 30 to both the box beam 11 and the battery cell 20. In addition, the pad 34 can increase the contact area between the press-fitting member 30 and the fastener, improving the connection strength.

According to a second aspect of this application, an electric apparatus is provided, including the battery 100 provided according to the first aspect. The battery 100 is used to provide electrical energy to the electric apparatus.

Referring to FIGs. 2 to 12, some embodiments of this application provide a battery 100, including a box 10, multiple battery cells 20, and a press-fitting member 30. The box 10 includes two opposite box beams 11 along the first direction X; the multiple battery cells 20 are accommodated in the box 10 and disposed between the two box beams 11; and two ends of the press-fitting member 30 are respectively connected to the two box beams 11. The press-fitting member 30 is arranged on a side of the battery cell 20 along second direction Z. The press-fitting member 30 includes a first pressing strip 31 and a second pressing strip 32 extending along the first pressing strip 31. The first pressing strip 31 includes a metal pressing strip 311 and a first insulation layer 312 covering the metal pressing strip 311. The second pressing strip 32 is an insulating member fixedly connected to the metal pressing strip 311, and the second pressing strip 32 is adhered to the battery cell 20.

The press-fitting member 30 provided in the embodiments of this application is connected to the box beams 11 on two sides of the box 10, which can alleviate the impact of the swelling force of the battery cell 20, reduce the deformation amount of the box beams 11, and improve the modal of the battery 100. The second pressing strip 32 is fixed above the battery cell 20, which can enhance the overall rigidity of the battery 100 and isolate the metal pressing strip 311, preventing high-voltage arcing. The second pressing strip 32 can also increase the height of the first side portion 321 and/or increase the flanging structure 3211, so as to increase the creepage distance, improving the safety of the battery.

According to a second aspect of this application, an electric apparatus is provided, including the battery 100 provided according to the first aspect. The battery 100 is used to provide electrical energy to the electric apparatus.

In some embodiments, the electric apparatus includes a vehicle body.

It should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof.

## Claims

1. A battery (100), **characterized by**:
a box (10) comprising at least two box beams (11) spaced apart along a first direction (Z);
a battery cell (20) accommodated in the box (10) and disposed between the two box beams (11), wherein the box beams (11) are wall panels on the box (10); and
a press-fitting member (30), wherein:
two ends of the press-fitting member (30) are respectively connected to the two box beams (11), the press-fitting member (30) is arranged on a side of the battery cell (20) along a second direction (X), and the second direction (X) intersects the first direction (Z); and
the press-fitting member (30) comprises a first pressing strip (31) and a second pressing strip (32) extending along the first pressing strip (31), the first pressing strip (31) comprises a metal pressing strip (311) and a first insulation layer (312) covering a surface of the metal pressing strip (311), and the second pressing strip (32) is an insulating member fixedly connected to the metal pressing strip (311).

2. The battery (100) according to claim 1, wherein the second pressing strip (32) is disposed between the first pressing strip (31) and the battery cell (20).

3. The battery (100) according to claim 2, wherein the second pressing strip (32) is adhered to the battery cell (20).

4. The battery (100) according to claim 3, wherein a glue accommodating groove (325) is provided on a side of the second pressing strip (32) back away from the first pressing strip (31), and the glue accommodating groove (325) is used for accommodating glue.

5. The battery (100) according to claim 2, wherein the second pressing strip (32) comprises two opposite first side portions (321) and a first bottom portion (322) connected between the two first side portions (321), the first side portions (321) and the first bottom portion (322) both extend along the first direction (Z), the two first side portions (321) and the first bottom portion (322) enclose an accommodation groove (324) with an open end, and the first pressing strip (31) is accommodated in the accommodation groove (324).

6. The battery (100) according to claim 5, wherein the first pressing strip (31) is fixed in the accommodation groove (324) using glue.

7. The battery (100) according to claim 5 or 6, wherein along the second direction (X), the first side portion (321) protrudes relative to the first pressing strip (31).

8. The battery (100) according to claim 7, wherein the battery (100) further comprises a busbar (50) electrically connected to the battery cell (20); and along the second direction (X), the first side portion (321) is flush with the busbar (50) or the first side portion (321) exceeds the busbar (50).

9. The battery (100) according to claim 8, wherein the first side portion (321) has a flanging structure (3211) folded towards an outer side of the accommodation groove (324), the flanging structure (3211) is located on a side of the busbar (50) back away from the battery cell (20), and the flanging structure (3211) is spaced apart from the busbar (50).

10. The battery (100) according to any one of claims 1 to 9, wherein the first insulation layer (312) covers a circumferential side of the metal pressing strip (311) along the first direction (Z), and the first insulation layer (312) comprises at least one of a thermoplastic insulation layer, an insulation coating, and an insulation patch layer.

11. The battery (100) according to any one of claims 1 to 10, wherein the press-fitting member (30) further comprises at least one adapter (33), the adapter (33) is connected to an end of the metal pressing strip (311), and the press-fitting member (30) is connected to the box beam (11) via the adapter (33).

12. The battery (100) according to claim 11, wherein the adapter (33) comprises a first fixing portion (331) and a second fixing portion (332) connected along the first direction (Z), the first fixing portion (331) is connected to the metal pressing strip (311), the second fixing portion (332) is connected to the box beam (11), and a surface of the first fixing portion (331) facing the metal pressing strip (311) is not flush with a surface of the second fixing portion (332) facing the box beam (11).

13. The battery (100) according to claim 12, wherein the adapter (33) is a metal member, and the first insulation layer (312) and the second pressing strip (32) both expose the second fixing portion (332); and
at least one first fixing hole (3321) is provided in the second fixing portion (332), at least one second fixing hole (111) is provided in the box beam (11), the battery (100) further comprises a fastener (60), and the fastener (60) passes through the corresponding first fixing hole (3321) and second fixing hole (111).

14. The battery (100) according to claim 11, wherein the press-fitting member (30) further comprises a pad (34), and the pad (34) is fixed between the box beam (11) and the adapter (33).

15. An electric apparatus, comprising the battery (100) according to any one of claims 1 to 14.

## Patentansprüche

1. Batterie (100), **gekennzeichnet durch**:
einen Kasten (10), umfassend mindestens zwei Kastenträger (11), die entlang einer ersten Richtung (Z) beabstandet sind;
eine Batteriezelle (20), die in dem Kasten (10) aufgenommen und zwischen den beiden Kastenträgern (11) angeordnet ist, wobei die Kastenträger (11) Wandplatten an dem Kasten (10) sind; und
ein Presspassungselement (30), wobei:
zwei Enden des Presspassungselements (30) jeweils mit den zwei Kastenträgern (11) verbunden sind, das Presspassungselement (30) auf einer Seite der Batteriezelle (20) entlang einer zweiten Richtung (X) angeordnet ist, und die zweite Richtung (X) die erste Richtung (Z) schneidet; und
das Presspassungselement (30) einen ersten Pressstreifen (31) und einen zweiten Pressstreifen (32) umfasst, der sich entlang des ersten Pressstreifens (31) erstreckt, wobei der erste Pressstreifen (31) einen Metallpressstreifen (311) und eine erste Isolationsschicht (312) umfasst, die eine Oberfläche des Metallpressstreifens (311) bedeckt, und der zweite Pressstreifen (32) ein Isolationselement ist, das fest mit dem Metallpressstreifen (311) verbunden ist.

2. Batterie (100) nach Anspruch 1, wobei der zweite Pressstreifen (32) zwischen dem ersten Pressstreifen (31) und der Batteriezelle (20) angeordnet ist.

3. Batterie (100) nach Anspruch 2, wobei der zweite Pressstreifen (32) auf die Batteriezelle (20) geklebt ist.

4. Batterie (100) nach Anspruch 3, wobei eine Klebstoffaufnahmenut (325) auf einer von dem ersten Pressstreifen (31) abgewandten Seite des zweiten Pressstreifens (32) bereitgestellt ist und die Klebstoffaufnahmenut (325) zum Aufnehmen von Klebstoff verwendet wird.

5. Batterie (100) nach Anspruch 2, wobei der zweite Pressstreifen (32) zwei gegenüberliegende erste Seitenabschnitte (321) und einen ersten Bodenabschnitt (322) umfasst, der zwischen den beiden ersten Seitenabschnitten (321) verbunden ist, wobei sich die ersten Seitenabschnitte (321) und der erste Bodenabschnitt (322) beide entlang der ersten Richtung (Z) erstrecken, wobei die beiden ersten Seitenabschnitte (321) und der erste Bodenabschnitt (322) eine Aufnahmenut (324) mit einem offenen Ende einschließen, und wobei der erste Pressstreifen (31) in der Aufnahmenut (324) aufgenommen ist.

6. Batterie (100) nach Anspruch 5, wobei der erste Pressstreifen (31) in der Aufnahmenut (324) mit Klebstoff fixiert ist.

7. Batterie (100) nach Anspruch 5 oder 6, wobei entlang der zweiten Richtung (X) der erste Seitenabschnitt (321) relativ zu dem ersten Pressstreifen (31) vorsteht.

8. Batterie (100) nach Anspruch 7, wobei die Batterie (100) ferner eine Sammelschiene (50) umfasst, die elektrisch mit der Batteriezelle (20) verbunden ist; und entlang der zweiten Richtung (X) der erste Seitenabschnitt (321) mit der Sammelschiene (50) bündig ist oder der erste Seitenabschnitt (321) die Sammelschiene (50) überragt.

9. Batterie (100) nach Anspruch 8, wobei der erste Seitenabschnitt (321) eine Flanschstruktur (3211) aufweist, die zu einer äußeren Seite der Aufnahmenut (324) hin gefaltet ist, wobei sich die Flanschstruktur (3211) auf einer von der Batteriezelle (20) abgewandten Seite der Sammelschiene (50) befindet, und wobei die Flanschstruktur (3211) von der Sammelschiene (50) beabstandet ist.

10. Batterie (100) nach einem der Ansprüche 1 bis 9, wobei die erste Isolationsschicht (312) eine Umfangsseite des Metallpressstreifens (311) entlang der ersten Richtung (Z) bedeckt und die erste Isolationsschicht (312) mindestens eine von einer thermoplastischen Isolationsschicht, einer Isolationsbeschichtung und einer Isolationsflickenschicht umfasst.

11. Batterie (100) nach einem der Ansprüche 1 bis 10, wobei das Presspassungselement (30) ferner mindestens einen Adapter (33) umfasst, der Adapter (33) mit einem Ende des Metallpressstreifens (311) verbunden ist und das Presspassungselement (30) mit dem Kastenträger (11) über den Adapter (33) verbunden ist.

12. Batterie (100) nach Anspruch 11, wobei der Adapter (33) einen ersten Fixierabschnitt (331) und einen zweiten Fixierabschnitt (332) umfasst, die entlang der ersten Richtung (Z) verbunden sind, wobei der erste Fixierabschnitt (331) mit dem Metallpressstreifen (311) verbunden ist, der zweite Fixierabschnitt (332) mit dem Kastenträger (11) verbunden ist, und eine Oberfläche des ersten Fixierabschnitts (331), die dem Metallpressstreifen (311) zugewandt ist, nicht mit einer Oberfläche des zweiten Fixierabschnitts (332), die dem Kastenträger (11) zugewandt ist, bündig ist.

13. Batterie (100) nach Anspruch 12, wobei der Adapter (33) ein Metallelement ist und die erste Isolationsschicht (312) und der zweite Pressstreifen (32) beide den zweiten Fixierabschnitt (332) freilegen; und
mindestens ein erstes Fixierloch (3321) in dem zweiten Abschnitt (332) bereitgestellt ist, mindestens ein zweites Fixierloch (111) in dem Kastenträger (11) bereitgestellt ist, die Batterie (100) ferner ein Befestigungselement (60) umfasst und das Befestigungselement (60) durch das entsprechende erste Fixierloch (3321) und das zweite Fixierloch (111) verläuft.

14. Batterie (100) nach Anspruch 11, wobei das Presspassungselement (30) ferner ein Kissen (34) umfasst, und das Kissen (34) zwischen dem Kastenträger (11) und dem Adapter (33) fixiert ist.

15. Elektrische Vorrichtung, umfassend die Batterie (100) nach einem der Ansprüche 1 bis 14.

## Revendications

1. Batterie (100), **caractérisée par** :
une boîte (10) comprenant au moins deux poutres de boîte (11) espacées le long d'une première direction (Z) ;
une cellule de batterie (20) reçue dans la boîte (10) et disposée entre les deux poutres de boîte (11), les poutres de boîte (11) étant des panneaux de paroi sur la boîte (10) ; et
un élément ajusté par pression (30), dans laquelle :
deux extrémités de l'élément ajusté par pression (30) sont respectivement raccordées aux deux poutres de boîte (11), l'élément ajusté par pression (30) est agencé sur un côté de la cellule de batterie (20) le long d'une deuxième direction (X), et la deuxième direction (X) coupe la première direction (Z) ; et
l'élément ajusté par pression (30) comprend une première bande de pression (31) et une deuxième bande de pression (32) s'étendant le long de la première bande de pression (31), la première bande de pression (31) comprend une bande de pression métallique (311) et une première couche d'isolation (312) couvrant une surface de la bande de pression métallique (311), et la deuxième bande de pression (32) est un élément d'isolation raccordé à demeure à la bande de pression métallique (311).

2. Batterie (100) selon la revendication 1, dans laquelle la deuxième bande de pression (32) est disposée entre la première bande de pression (31) et la cellule de batterie (20).

3. Batterie (100) selon la revendication 2, dans laquelle la deuxième bande de pression (32) est collée à la cellule de batterie (20).

4. Batterie (100) selon la revendication 3, dans laquelle une rainure de réception de colle (325) est ménagée sur un côté de la deuxième bande de pression (32) opposé à la première bande de pression (31), et la rainure de réception de colle (325) est utilisée pour recevoir de la colle.

5. Batterie (100) selon la revendication 2, dans laquelle la deuxième bande de pression (32) comprend deux premières parties côté (321) opposées et une première partie fond (322) reliée entre les deux premières parties côté (321), les premières parties côté (321) et la première partie fond (322) s'étendent toutes le long de la première direction (Z), les deux premières parties côté (321) et la première partie fond (322) enferment une rainure de réception (324) présentant une extrémité ouverte, et la première bande de pression (31) est reçue dans la rainure de réception (324).

6. Batterie (100) selon la revendication 5, dans laquelle la première bande de pression (31) est fixés dans la rainure de réception (324) à l'aide d'une colle.

7. Batterie (100) selon la revendication 5 ou 6, dans laquelle le long de la deuxième direction (X), la première partie côté (321) fait saillie par rapport à la première bande de pression (31).

8. Batterie (100) selon la revendication 7, dans laquelle la batterie (100) comprend en outre une barre omnibus (50) électriquement connectée à la cellule de batterie (20) ; et le long de la deuxième direction (X), la première partie côté (321) vient à ras de la barre omnibus (50) ou la première partie côté (321) dépasse la barre omnibus (50).

9. Batterie (100) selon la revendication 8, dans laquelle la première partie côté (321) comporte une structure de bordage (3211) repliée vers un côté externe de la rainure de réception (324), la structure de bordage (3211) est localisée sur un côté de la barre omnibus (50) opposé à la cellule de batterie (20), et la structure de bordage (3211) est espacée de la barre omnibus (50).

10. Batterie (100) selon l'une quelconque des revendications 1 à 9, dans laquelle la première couche d'isolation (312) couvre un côté circonférentiel de la bande de pression métallique (311) le long de la première direction (Z), et la première couche d'isolation (312) comprend au moins l'un d'une couche d'isolation en thermoplastique, d'un revêtement d'isolation et d'une couche de pièce d'isolation.

11. Batterie (100) selon l'une quelconque des revendications 1 à 10, dans laquelle l'élément ajusté par pression (30) comprend en outre au moins un adaptateur (33), l'adaptateur (33) est connecté à une extrémité de la bande de pression métallique (311), et l'élément ajusté par pression (30) est connecté à la poutre de boîte (11) par l'intermédiaire de l'adaptateur (33).

12. Batterie (100) selon la revendication 11, dans laquelle l'adaptateur (33) comprend une première partie de fixation (331) et une deuxième partie de fixation (332) raccordées le long de la première direction (Z), la première partie de fixation (331) est raccordée à la bande de pression métallique (311), la deuxième partie de fixation (332) est raccordée à la poutre de boîte (11), et une surface de la première partie de fixation (331) faisant face à la bande de pression métallique (311) ne vient pas à ras de la surface de la deuxième partie de fixation (332) faisant face à la poutre de boîte (11).

13. Batterie (100) selon la revendication 12, dans laquelle l'adaptateur (33) est un élément métallique, et la première couche d'isolation (312) et la deuxième bande de pression (32) exposent toutes deux la deuxième partie de fixation (332) ; et
au moins un premier trou de fixation (3321) est fourni dans la deuxième partie de fixation (332), au moins un deuxième trou de fixation (111) est fourni dans la poutre de boîte (11), la batterie (100) comprend en outre un dispositif de fixation (60), et le dispositif de fixation (60) traverse le premier trou de fixation (3321) et le deuxième trou de fixation (111) correspondant.

14. Batterie (100) selon la revendication 11, dans laquelle l'élément ajusté par pression (30) comprend en outre un bloc (34), et le bloc (34) est fixé entre la poutre de boîte (11) et l'adaptateur (33).

15. Appareil électrique, comprenant la batterie (100) selon l'une quelconque des revendications 1 à 14.
